# EUROPEAN PATENT APPLICATION

(11) **EP 2 144 143 A2**
(43) Date of publication of application: **13.01.2010**
(21) Application number: 09164762.8
(22) Date of filing: 07.07.2009
(51) Int. Cl.: G06F 3/041, G06F 3/042

(54) **Image input/output device and method of correcting photo-reception level in image input/output device, and method of inputting image**

(30) Priority: 07.07.2008 JP 2008176685
(71) Applicant: Sony Corporation, Tokyo 108-0075 (JP)
(72) Inventor: Tsuzaki, Ryoichi, TOKYO 108-0075 (JP); Harada, Tsutomu, TOKYO 108-0075 (JP); Yamaguchi, Kazunori, TOKYO 108-0075 (JP); Tateuchi, Mitsuru, TOKYO 108-0075 (JP)
(74) Representative: Beder, Jens

(57) **Abstract**

The present invention provides an image input/output device including an input/output panel, a correction section and an image processing section. The input/output panel includes display elements and photo-reception elements to receive lights emitted from the display plane and then reflected from an external adjacent object. The correction section corrects photo-reception signals from the photo-reception elements based on an in-plane correction table where correction coefficients are associated with positions on the display plane, respectively. A value distribution profile in the display plane of the correction coefficients is defined based on both of a light intensity distribution profile of the light emitted from the display plane and a photo-reception sensitivity distribution profile of the photo-reception elements. The image processing section obtains information concerning one or more of position, shape and size of the external adjacent object based on the photo-reception signals corrected by the correction section.

## Description

### BACKGROUND OF THE INVENTION

### 1. Field of the Invention

The present invention relates to an image input/output device having an image display function and an image pickup function and a method of inputting images by using the image input/output device, and a method of correcting a photo-reception level in such an image input/output device.

### 2. Description of the Related Art

In image display devices, there are some display devices including touch panels. In the touch panels, in addition to a resistance type touch panel using a change in electric resistance and a capacitance type touch panel using a change in capacitance, there is an optical type touch panel optically detecting a finger or the like. In the optical type touch panel, for example, light from a backlight is modulated with a liquid crystal element, and an image is displayed on a display plane. Meanwhile, the light emitted from the display plane and reflected by an adjacent object such as a finger is received by photo-reception elements aligned in the display plane. Thereby a position or the like of the adjacent object is detected. Japanese Unexamined Patent Publication No. 2004-127272 discloses such an image display device. The display device described in Japanese Unexamined Patent Publication No. 2004-127272 includes a display section which has a display section displaying an image and an image pickup section picking up an image of an object.

### SUMMARY OF THE INVENTION

In the above-described image display device, the light emitted from the backlight is reflected by the external adjacent object, and the returned light is detected. However, light intensity of the backlight is not uniform in a display plane in many cases (for example, a central part of the display plane has light intensity higher than that of a surrounding part). Thus, the light intensity of the light reflected by the adjacent object is varied in the central part and the surrounding part. Moreover, although the photo-reception elements receiving the reflected light are aligned along the display plane, photo-reception sensitivity is generally varied in each photo-reception element. Therefore, an image pickup signal obtained from the photo-reception elements is strongly influenced by a light distribution in the display plane of the light emitted from the backlight, and variation of the photo-reception sensitivity among the photo-reception elements.

Under this situation, when an image pickup signal is binarized to determine a position of the adjacent object, binarization may be inappropriately performed due to error of the image pickup signal which is caused by ununiformity in the light intensity of the backlight and variation of the photo-reception sensitivity of each photo-reception element. As a result, there is a risk that the adjacent object is not accurately detected, and position detection error occurs. That is, in the image display device including the optical type touch panel of the related art, it is difficult to detect a finger or the like with high accuracy.

In view of the foregoing, it is desirable to provide an image input/output device capable of detecting an adjacent object such as a finger with high accuracy and a method of inputting images by using the image input/output device, and a method of correcting a photo-reception level in such an image input/output device.

According to an embodiment of the present invention, there is provided an image input/output device including: an input/output panel including a plurality of display elements displaying an image on a display plane based on an image signal, and including a plurality of photo-reception elements arranged along the display plane to receive lights which are emitted from the display plane and then reflected from an external adjacent object; a correction section correcting photo-reception signals from the photo-reception elements with use of an in-plane correction table where correction coefficients are associated with positions on the display plane, respectively, a value distribution profile in the display plane of the correction coefficients being defined based on both of a light intensity distribution profile in the display plane of the light emitted from the display plane and a photo-reception sensitivity distribution profile in the display plane of the photo-reception elements; and an image processing section obtaining information concerning one or more of position, shape and size of the external adjacent object based on the photo-reception signals corrected by the correction section.

In the image input/output device according to the embodiment of the present invention, the input/output panel is configured with a so-called display plane with a touch panel capable of displaying an image with the plurality of display elements and detecting the external adjacent object with the plurality of photo-reception elements. Here, the external adjacent object is, for example, a finger, and reflects the light emitted from the display plane. This reflected light is received by the photo-reception elements, and converted to a photo-reception signal. This photo-reception signal is corrected by the correction section using the in-plane correction table. The in-plane correction table is configured in such a manner that correction coefficients are associated with positions on the display plane, respectively, a value distribution profile in the display plane of the correction coefficients being defined based on both of a light intensity distribution profile in the display plane of the light emitted from the display plane and a photo-reception sensitivity distribution profile in the display plane of the photo-reception elements. Thereby, correction corresponding to the light intensity distribution profile and the photo-reception sensitivity distribution profile in the display plane is performed to the photo-reception signal.

In particular, in the case where the value distribution profile of the correction coefficient is defined as an inversion of a synthesized distribution profile which is a synthesis of the light intensity distribution profile and the photo-reception sensitivity distribution profile, and the correction section corrects the photo-reception signals from the photo-reception elements through multiplying the photo-reception signals by the correction coefficients, respectively, it is possible to obtain the photo-reception signal with a uniform level in which influence from the light intensity distribution profile in the display plane of the emitted light and the photo-reception sensitivity distribution profile in the display plane of the photo-reception elements is canceled.

According to the embodiment of the present invention, there is provided a method of inputting images including: receiving lights by a plurality of photo-reception elements arranged along the display plane, the lights being emitted from a display plane and then reflected from an external adjacent object; correcting photo-reception signals from the photo-reception elements with use of correction coefficients having a value distribution profile in the display plane, the value distribution profile being defined as an inversion of a synthesized distribution profile which is a synthesis of a light intensity distribution profile in the display plane of the lights emitted from the display plane and a photo-reception sensitivity distribution profile in the display plane of the photo-reception elements; and obtaining information concerning one or more of position, shape and size of the external adjacent object based on the photo-reception signals corrected by the correction section.

In the method of inputting the images according to the embodiment of the present invention, correction is performed to the photo-reception signal from each of the photo-reception elements with use of correction coefficients having a value distribution profile in the display plane, the value distribution profile being defined as an inversion of a synthesized distribution profile which is a synthesis of a light intensity distribution profile in the display plane of the lights emitted from the display plane and a photo-reception sensitivity distribution profile in the display plane of the photo-reception elements. As a result, the influence from the light intensity distribution profile in the display plane of the emitted light and the photo-reception sensitivity distribution profile of the photo-reception elements is eliminated from the photo-reception signal.

In the image input/output device according to the embodiment of the present invention, photo-reception signals from the photo-reception elements are corrected with use of an in-plane correction table where correction coefficients are associated with positions on the display plane, respectively, a value distribution profile in the display plane of the correction coefficients being defined based on both of a light intensity distribution profile in the display plane of the light emitted from the display plane and a photo-reception sensitivity distribution profile in the display plane of the photo-reception elements, and information concerning one or more of position, shape and size of the external adjacent object is obtained based on the photo-reception signals corrected by the correction section. Thus, by appropriately setting the correction coefficient, it is possible to perform a suitable correction to the photo-reception signal corresponding to the light intensity distribution profile and the photo-reception sensitivity distribution profile in the display plane. In particular, in the case where the value distribution profile of the correction coefficient is defined as an inversion of a synthesized distribution profile which is a synthesis of the light intensity distribution profile and the photo-reception sensitivity distribution profile, and the correction section corrects the photo-reception signals from the photo-reception elements through multiplying the photo-reception signals by the correction coefficients, respectively, it is possible to obtain the photo-reception signal with a uniform level in which influence from the light intensity distribution profile in the display plane of the emitted light and the photo-reception sensitivity distribution profile in the display plane of the photo-reception elements is canceled. Therefore, it is possible to detect the adjacent object such as a finger with high accuracy.

In the method of inputting the images according to the embodiment of the present invention, correction is performed to the photo-reception signal from each of the photo-reception elements with use of correction coefficients having a value distribution profile in the display plane, the value distribution profile being defined as an inversion of a synthesized distribution profile which is a synthesis of a light intensity distribution profile in the display plane of the lights emitted from the display plane and a photo-reception sensitivity distribution profile in the display plane of the photo-reception elements. As a result, it is possible to obtain the photo-reception signal with a uniform level in which influence from the light intensity distribution profile in the display plane of the emitted light and the photo-reception sensitivity distribution profile in the display plane of the photo-reception elements is canceled. Therefore, it is possible to detect the adjacent object such as a finger with high accuracy.

Other and further objects, features and advantages of the invention will appear more fully from the following description.

### BRIEF DESCRIPTION OF THE DRAWINGS

Fig.1 is a block diagram illustrating the configuration of an image input/output device according to an embodiment of the present invention.
Fig.2 is a block diagram illustrating detail of the configuration of the image input/output device in Fig.1.
Fig.3 is an enlarged cross section of a part of an input/output panel.
Fig.4 is a flow chart when forming an in-plane correction table.
Fig.5 is a description view of a group in the case where a plurality of photo-reception elements are separated to a plurality of groups.
Fig.6 is a view indicating an example of the in-plane correction table.
Fig.7 is a graph indicating an example of the in-plane correction table.
Fig.8 is a flow chart of a whole image processing with the image input/output device.
Figs.9A to 9E are graphs indicating examples of a photo-reception signal, the in-plane correction table, and a corrected photo-reception signal.
Fig.10 is a block diagram illustrating the configuration of an image input/output device according to a modification of the embodiment.

### DETAILED DESCRIPTION OF THE PREFERRED EMBODIMENT

A preferred embodiment of the present invention will be described in detail with reference to the accompanying drawings.

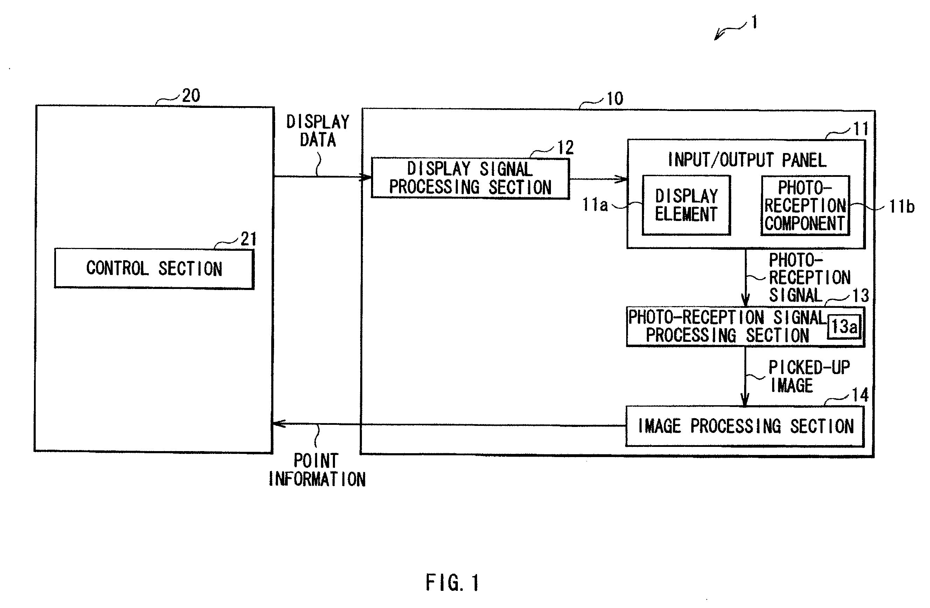

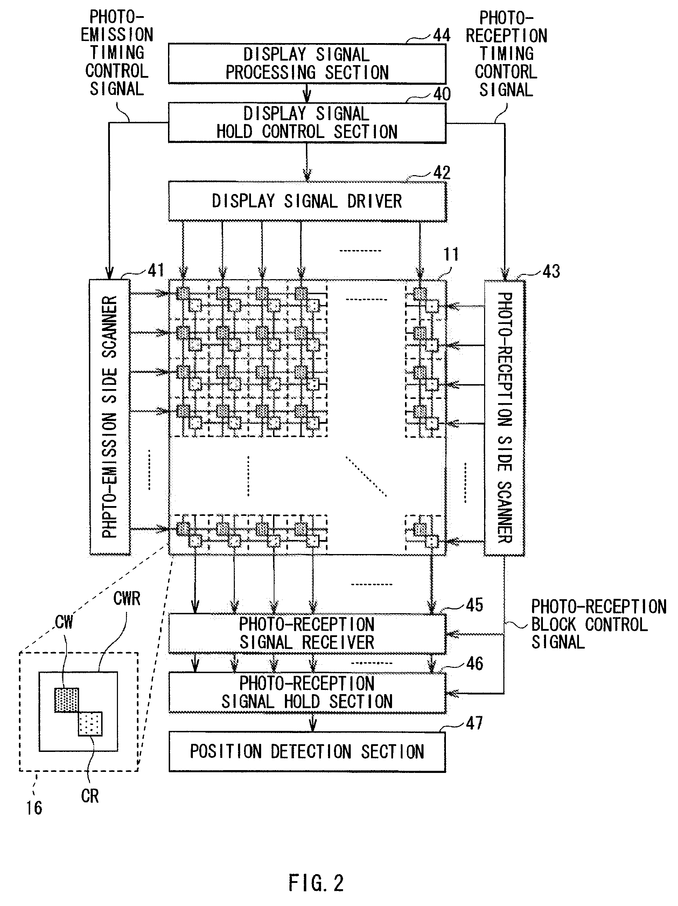

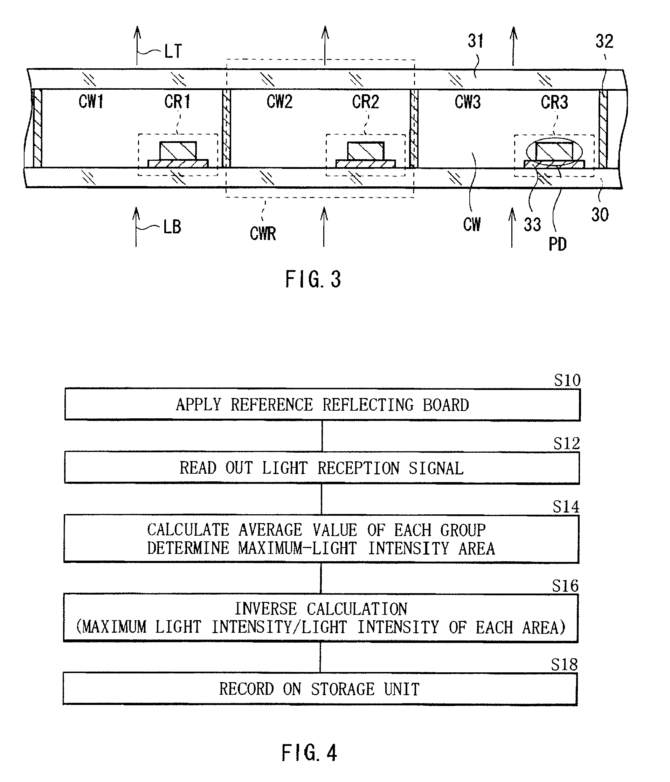

Fig.1 illustrates the schematic configuration of an image input/output device 1 according to the embodiment of the present invention. Fig.2 illustrates the configuration of the image input/output device 1 according to the embodiment. Fig.3 illustrates an enlarged cross section of a part of an input/output panel. As illustrated in Fig.1, the image input/output device 1 according to the embodiment includes a display 10, an electric device main body 20 using the display 10. The display 10 includes an input/output panel 11, a display signal processing section 12, a photo-reception signal processing section 13, and an image processing section 14. The electric device main body 20 includes a control section 21.

As illustrated in Fig.2, the input/output panel 11 is configured with a liquid crystal display panel in which a plurality of pixels 16 are aligned in matrix, and includes a display element 11a and a photo-reception element 11b. The display element 11a is a liquid crystal element displaying an image of a figure, a letter, or the like on a display plane by using light emitted from a backlight as a light source. The photo-reception element 11b is a photo-reception element such as a photodiode receiving light and outputting it as an electric signal. When the light emitted from the backlight is reflected by an external adjacent object such as a finger which is outside the input/output panel 11, and returned, the photo-reception element 11b receives the reflected and returned light and outputs a photo-reception signal. Hereafter, the external adjacent object is an object which is contact with the display plane or is close to the display plane. The photo-reception element 11b according to the embodiment is arranged in each pixel 16, and a plurality of the photo-reception elements 11b are aligned in a plane.

As illustrated in Figs.2 and 3, the input/output panel 11 has a configuration in which a plurality of photo-emission photo-reception cells CWR having structures separated from one another by partition walls 32 are aligned in matrix between a pair of transparent substrates 30 and 31. Each photo-emission photo-reception cell CWR has a photo-emission cell CW (CW1, CW2, CW3,...), and a photo-reception cell CR (CR1, CR2, CR3,...) which is included in the photo-emission cell CW. The photo-emission cell CW is made of a liquid crystal cell as the display element 11a, and the photo-reception cell CR includes a photo-reception element PD as the photo-reception element 11b. In the photo-reception cell CR, a shielding layer 33 is arranged between the transparent substrate 30 on the backlight side and the photo-reception element PD so that light LB emitted from the backlight does not enter to the photo-reception element PD. Without being influenced by the light LB from the backlight, each photo-reception element PD detects only light entering from a direction of the transparent substrate 31 which is on the opposite side of the backlight.

The display signal processing section 12 illustrated in Fig.1 is connected to a previous stage of the input/output panel 11. The display signal processing section 12 is a circuit driving the input/output panel 11 so that the input/output panel 11 displays an image on the basis of the display data.

As illustrated in Fig.2, the display signal processing section 12 includes a display signal hold control section 40, a photo-emission side scanner 41, a display signal driver 42, and a photo-reception side scanner 43. The display signal hold control section 40 stores and holds a display signal for each screen (each display of one field) output from the display signal generating section 44 in a field memory of, for example, SRAM (static random access memory). The display signal hold control section 40 also controls the photo-emission side scanner 41 and the display signal driver 42 driving each photo-emission cell CW, and the photo-reception side scanner 43 driving each photo-reception cell CR so that the photo-emission side scanner 41, the display signal driver 42, and the photo-reception side scanner 43 operate in conjunction with one another. Specifically, the display signal hold control section 40 outputs a photo-emission timing control signal to the photo-emission side scanner 41, outputs a photo-reception timing control signal to the photo-reception side scanner 43, and outputs a display signal of one horizontal line to the display signal driver 42 on the basis of the control signal and the display signal held in the field memory. Line-sequential operation is performed with the control signals and the display signals.

The photo-emission side scanner 41 has a function to select a photo-emission cell CW to be driven in response to the photo-emission timing control signal output from the display signal hold control section 40. Specifically, the photo-emission side scanner 41 supplies a photo-emission selection signal to each pixel 16 through a gate line for photo-emission connected to each pixel 16 in the input/output panel 11, and controls the photo-emission device selection switch. That is, when voltage is applied and the photo-emission element selection switch of a certain pixel 16 is turned on with the photo-emission selection signal, photo-emission with luminance corresponding to the voltage supplied from the display signal driver 42 is performed in that pixel 16.

The display signal driver 42 has a function to supply display data to a photo-emission cell CW to be driven in response to the display signal of one horizontal line output from the display signal hold control section 40. Specifically, the display signal driver 42 supplies voltage corresponding to the display data, to the pixel 16 selected by the above-described photo-emission side scanner 41 through a data supply line connected to each pixel 16 in the input/output panel 11. The photo-emission side scanner 41 and the display signal driver 42 line-sequentially operate in conjunction with each other. Thereby, an image corresponding to arbitrary display data is displayed on the input/output panel 11.

The photo-reception side scanner 43 has a function to select a photo-reception cell CR to be driven in response to the photo-reception timing control signal output from the display signal hold control section 40. Specifically, the photo-reception side scanner 43 supplies a photo-reception selection signal to each pixel 16 through a gate line for photo-reception connected to each pixel 16 in the input/output panel 11, and controls a photo-reception element selection switch. That is, similarly to the above-described operation of the photo-emission side scanner 41, when voltage is applied and the photo-reception element selection switch of a certain pixel 16 is turned on with the photo-reception selection signal, the photo-reception signal detected from that pixel 16 is output to a photo-reception signal receiver 45. Thereby, for example, it is possible that the photo-reception cell CR receives and detects the light reflected by the external adjacent object which is contact with or close to the display plane on the basis of the light emitted from a certain photo-emission cell CW. The photo-reception side scanner 43 outputs a photo-reception block control signal to the photo-reception signal receiver 45 and a photo-reception signal hold section 46, and controls these blocks contributing to the photo-reception operation. In the image display device according to the embodiment, the gate line for photo-emission and the gate line for photo-reception described above are separately connected to each photo-emission photo-reception cell CWR. Thereby, the photo-emission side scanner 41 and the photo-reception side scanner 43 operate independently from each other.

The photo-reception signal processing section 13 (correction section) illustrated in Fig.1 is connected to a subsequent stage of the input/output panel 11. The photo-reception signal processing section 13 is a circuit which performs amplification or the like by taking in the photo-reception signal from the photo-reception element 11b, and corrects the photo-reception signal by using an in-plane correction table 13a. The in-plane correction table 13a is used when performing compensation to a photo-emission intensity (light intensity distribution profile in the display plane of light emitted from the display plane) in the plane of the backlight and a photo-reception sensitivity (photo-reception sensitivity distribution profile in the plane of the plurality of photo-reception elements) of each photo-reception element 11b. That is, the photo-reception signal processing section 13 generates a picked-up image in which influence from variation of the light intensity distribution profile in the display plane of the backlight, and variation of the photo-reception sensitivity of each photo-reception element 11b is removed. The in-plane correction table 13a is stored in a memory (not illustrated in the figure) arranged in the photo-reception signal processing section 13. However, the in-plane correction table 13a may be stored in other blocks.

As illustrated in Fig.2, the photo-reception signal processing section 13 includes the photo-reception signal receiver 45 and the photo-reception signal hold section 46. The photo-reception signal receiver 45 has a function to obtain a photo-reception signal of one horizontal line output from each photo-reception cell CR in response to the photo-reception block control signal output from the photo-reception side scanner 43. The photo-reception signal of one horizontal line obtained in the photo-reception signal receiver 45 is output to the photo-reception signal hold section 46.

The photo-reception signal hold section 46 has a function to restructure the photo-reception signal output from the photo-reception receiver 45 into a photo-reception signal for each screen (each display of one field) in response to the photo-reception block control signal output from the photo-reception side scanner 43, and to store and hold the photo-reception signal in, for example, a field memory of SRAM. Data of the photo-reception signal stored in the photo-reception signal hold section 46 is output to a position detection section 47 in the image processing section 14 (Fig.1). The photo-reception signal hold section 46 may be made of a storage element except the memory. For example, the photo-reception signal may be held in a capacity element as analogue data (electric charge).

The image processing section 14 (Fig.1) is connected to a subsequent stage of the photo-reception signal processing section 13. The image processing section 14 takes in the corrected picked-up image from the photo-reception signal processing section 13, and performs binarization, noise removal, labeling, or the like, and then obtains point information of the external adjacent object, that is, information which indicates a center of gravity and a central coordinate of the external adjacent object, and a region (size and shape) of the external adjacent object. More specifically, the position detection section 47 (Fig.2) in the image processing section 14 performs signal processing on the basis of data of the photo-reception signal output from the photo-reception signal hold section 46, and specifies the position where the object detected in the photo-reception cell CR is or the like. Thereby, it is possible to specify the position of a finger or the like which is in contact with or close to the display plane. At that time, since the position detection section 47 uses the corrected picked-up image, determination error when detecting the position of the external adjacent object or the like is reduced.

The electric device main body 20 (Fig.1) outputs display data to the display signal processing section 12 in the display 10, and inputs the point information from the image processing section 14. The control section 21 changes a display image by using the point information.

As illustrated in Fig.2, the control section 21 (Fig.1) includes the display signal generating section 44. The display signal generating section 44 generates, for example, display signals for displaying images (fields) on the basis of the image data generated and supplied by CPU (central processing unit) or the like which is not illustrated in the figure, and outputs the display signal to the display signal hold control section 40.

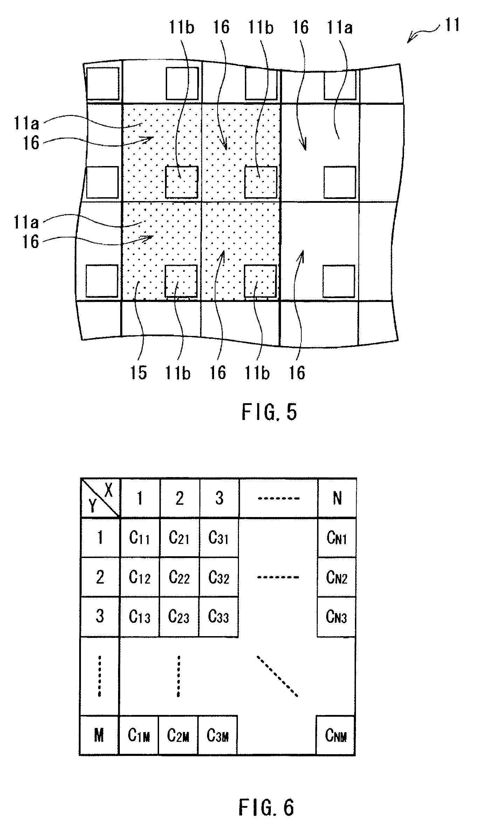

Next, a method of forming the in-plane correction table 13a will be described. Fig.4 indicates a process flow to form the in-plane correction table 13a. Here, as illustrated in Fig.5, the description will be made for the case where a group 15 configured with the plurality (here, four) of photo-reception elements 11b included in the plurality (here, four) of photo-emission photo-reception cells CWR is regarded as one correction section, and correction is performed.

A reference reflecting plate (not illustrated in the figure) with a surface having a uniform reflectance is located to face the input/output panel 11 so that the whole surface of the input/output panel 11 is covered (S10). Under this situation, all of the photo-emission cells CW (liquid crystal cells) as the display elements 11a are set in a white display state (that is, the highest gray-scale state) with a reference image display signal from the display signal generating section (Fig.2), and thereby almost all of the light from the backlight is emitted from the display plane of the input/output panel 11. The light emitted from the display plane is reflected by the reference reflecting plate, and each photo-reception element 11b receives the reflected light. However, in this case, among the photo-emission cells CW, all of the photo-emission cells of R, G, and B are in the highest gray-scale, and thereby the white display in a literal sense (white display in a restricted meaning) may be performed. Alternatively, only the photo-emission cells of one specific color (for example, R) may be in the highest gray-scale (white display in an extended meaning) and the photo-emission cells of other colors (for example, G and B) may be in the lowest gray-scale (black display in an extended meaning). The liquid crystal cell typically transmits infrared light without depending on the state of the liquid crystal (opening/closing state). Therefore, when an infrared light selection transmittance filter is arranged on each photo-reception element, the reflection and the photo-reception as described above are performed by using the infrared light included in the backlight even if the liquid crystal cell is in the black display state.

Next, a photo-reception signal output from each photo-reception element 11 b is read (S 12). The photo-reception element 11b used in the embodiment is arranged in each pixel 16. Therefore, to reduce capacity of the memory which stores the in-plane correction table 13a, the plurality of photo-reception elements 11b arranged immediately adjacent to one another constitute one group as described above, and a correction coefficient is obtained for each group. As an example, as illustrated in Fig.5, among the pixels 16 aligned in a column direction and a row direction, four (2x2) of the pixels 16 immediately adjacent to one another in the column direction and the row direction constitute one group. Thereby, the photo-reception elements 11 b arranged in the plurality of pixels 16, respectively, are separated to a plurality of groups, and each group form a photo-reception element group. Four (2x2) of the photo-reception elements 11b (pixels 16) may constitute one group as illustrated in Fig.5. The photo-reception elements 11b of the other number (for example, 3x3, 2x4, 4x4, or the like) may constitute one group.

Next, average intensity of the photo-reception signals output from the photo-reception elements 11 b which constitute each group is calculated and obtained. That is, the average value of the photo-reception intensity of the reflected light is obtained for each group, and the obtained value is regarded as a group average value. Further, the maximum value among the plurality of group average values obtained from the calculation is regarded as a maximum group average value (S 14).

Each group average value obtained in S 14 is divided by the maximum group average value to obtain a normalized value, and an inverse of the normalized value is obtained by an inverse calculation (S16). The result is regarded as a correction coefficient. In this case, since the above normalized value may be always 1.0 or less, the correction coefficient as the inverse of the normalized value may be always 1.0 or more. For this reason, the capacity of the memory necessary for storing is small in a comparison with the case where the correction coefficient is in a range of 1.0 or less. Moreover, since it is generally considered that the variation of the light intensity distribution profile in the display plane of the backlight and the variation of the photo-reception sensitivity of each photo-reception element 11b are not remarkably large, each group average value is approximately slightly lower than the maximum group average value. Naturally, the value of the correction coefficient as the result of the inverse calculation is within a relatively-narrow range which is approximately slightly above 1.0. Thus, as will be described later, the capacity of the memory necessary for storing is small also from this viewpoint. In this manner, the correction coefficients of all the groups are obtained by performing the calculation of S16 for each group. Thereby, the in-plane correction table 13a, for example, as illustrated in Fig.6 is obtained, and recorded in the above-described memory (S 18).

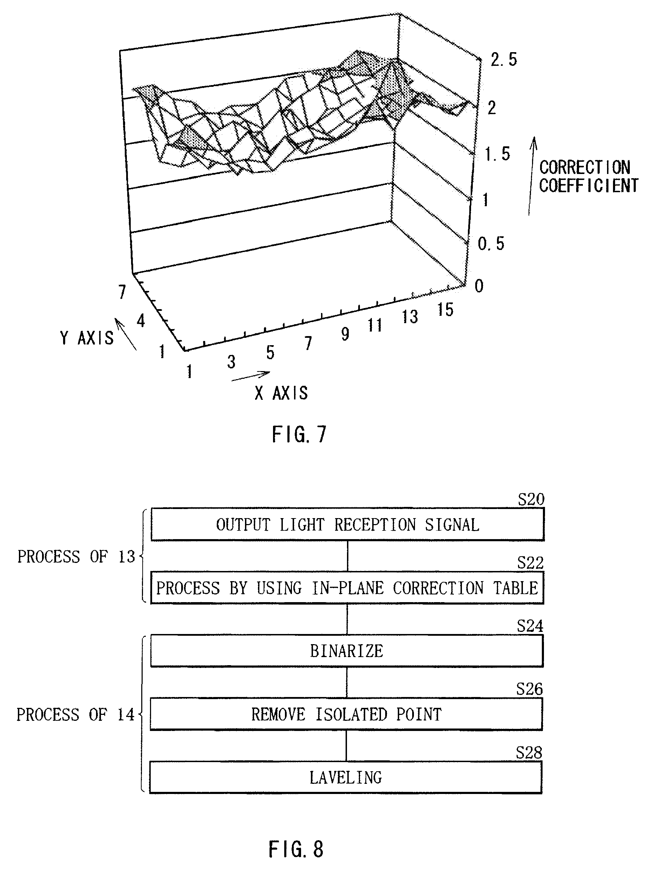

The in-plane correction table 13a in Fig.6 illustrates the case where, in the row direction and the column direction of the display plane, that is, in an x-axis direction and a y-axis direction, groups are formed as follows. In the x-axis direction, X groups (X=1, 2, 3...N) are formed. In the y-axis direction, Y groups (Y=1, 2, 3...M) are formed. The correction coefficient (C₁₁, C₂₁, ...C_{NM}) is obtained for each group. Fig.7 illustrates an example where the in-plane correction table 13a is indicated in a three-dimensional graph. In the schematic view of Fig.7, the bottom face corresponds to the display plane of the input/output panel 11, and the height direction indicates the correction coefficient. In this manner, in the embodiment, it is not that the correction coefficient is obtained for each photo-reception element, but it is that the plurality of photo-reception elements are grouped, and the correction coefficient is obtained for each group. Therefore, the number of the correction coefficients is reduced, and the memory capacity necessary for storing is small.

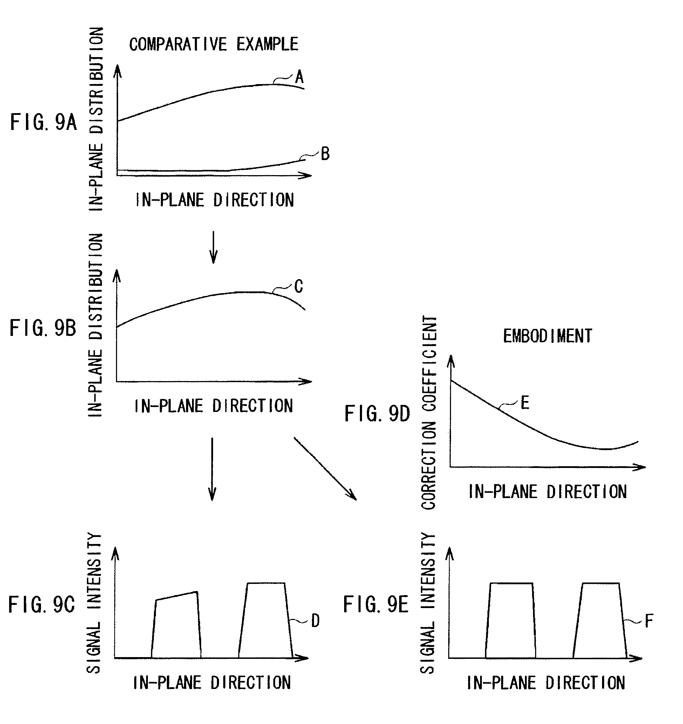

Next, operations of the image input/output device 1 according to the embodiment will be described. Fig.8 indicates a process flow when the image input/output device 1 performs an in-plane correction. Figs.9A to 9E illustrate the photo-reception signal, the in-plane correction table 13a, and the corrected photo-reception signal. Here, Fig.9A illustrates an example of the ununiform state in the plane, and the vertical axis indicates a degree of ununiformity, and the horizontal axis indicates an in-plane direction. Fig.9B illustrates an example of a synthesized distribution (curve C) of a light intensity distribution profile in the display plane of the light emitted from the display plane (curve A), and a photo-reception sensitivity distribution profile in the plane of the plurality of photo-reception elements 11b (curve B). In Fig.9B, the vertical axis indicates the degree of ununiformity, and the horizontal axis indicates the in-plane direction. Fig.9C illustrates an example of the photo-reception signal output from the photo-reception element 11b when there is the synthesized distribution indicated with curve C. In Fig.9C, the vertical axis indicates the degree of ununiformity, and the horizontal axis indicates the in-plane direction. Fig.9D illustrates an example of the in-plane correction table 13a for compensating the synthesized distribution indicated with curve C. In Fig.9D, the vertical axis indicates the correction coefficient, and the horizontal axis indicates the in-plane direction. Fig.9E illustrates an example of intensity of a compensated signal obtained by multiplying the intensity of the signal output from the photo-reception element 11b by a value in the in-plane correction table indicated with curve E. In Fig.9E, the vertical axis indicates the signal intensity, and the horizontal axis indicates the in-plane direction.

The display data output from the electric device main body 20 is input to the display signal processing section 12. The display signal processing section 12 drives the input/output panel 11 so that an image is displayed on the input/output panel 11 on the basis of the display data.

The input/output panel 11 displays the image on the display element 11a by using the light emitted from the backlight. Meanwhile, the input/output panel 11 drives the photo-reception element 11b. When the external adjacent object such as a finger in contact with or close to the display element 11a, the image displayed on the display element 11a is reflected by the external adjacent object, and this reflected light is detected in the photo-reception element 11b. The photo-reception signal is output from the photo-reception element 11b by this detection (S20). At this time, the ununiform state in the light intensity in the plane of the backlight is as indicated with curve A in Fig.9A. The ununiform state in the photo-reception sensitivity in the plane of the photo-reception elements 11b aligned in matrix is as indicated with curve B in Fig.9A. The synthesized distribution of such curve A and curve B is as indicated with curve C in Fig.9B. Thereby, the signal intensity of the photo-reception signal D output from the photo-reception element 11 b is varied in the plane due to the ununiform state in the plane indicated with curve C (curve A and curve B).

The photo-reception signal processing section 13 inputs the photo-reception signal and performs process such as amplification, and processes the photo-reception signal by using the in-plane correction table 13a read from the above-described storage unit (S22). Specifically, the photo-reception signal processing section 13 calculates (multiply) the input photo-reception signal by a value in the in-plane correction table 13a in Fig.9D, and performs the in-plane correction so that the ununiform state in the plane of the intensity of the photo-reception signal D as illustrated in Fig.9C is corrected to the uniform state in the plane of the intensity of the photo-reception signal F as illustrated in Fig.9E. In this manner, the photo-reception signal processing section 13 obtains the picked-up image from the photo-reception signal D which is corrected through the in-plane correction.

Next, the image processing section 14 inputs the in-plane corrected picked-up image, and performs binarization to the picked-up image (S24). That is, the image processing section 14 stores a threshold value which is previously set. For example, the image processing section 14 compares and determines whether the signal intensity of the picked-up image data is smaller, or equal to or larger than the threshold value, and performs binarization for setting "0" or "1". Thereby, the section receiving light which is reflected by the external adjacent object is set to "1" and another section is set to "0"

The image processing section 14 removes an isolated point from the binarized picked-up image (S26). That is, in the case of the above-described binarization, the image processing section 14 removes noise by removing the section of "1" isolated from the section corresponding to the external adjacent object.

After this, the image processing section 14 performs labeling (S28). That is, in the case of the above-described binarization, the image processing section 14 performs labeling to the section set to "1". Then, the image processing section 14 detects the region set to "1" as the region of the external adjacent object, and obtains a center of gravity or a central coordinate of this region. Such data is output to the control section 21 as the point information.

Next, the control section 21 uses the point information input from the image processing section 14, and performs necessary processing such as changing the display image. For example, in the case where a certain operation menu is displayed on the screen, the control section 21 detects which button in the operation menu is selected by a user's finger, and executes the command corresponding to the selected button.

In this manner, according to the embodiment, the in-plane correction table 13a is used in compensating the variation of the light intensity distribution profile in the plane of the backlight for displaying the image and the variation of the photo-reception sensitivity of each photo-reception element 11b, and the photo-reception signal from the photo-reception element which receives the light emitted from the backlight and reflected by the external adjacent object is corrected. Thereby, the image input/output device 1 performs the image processing with high accuracy on the basis of the corrected photo-reception signal. As a result, the external adjacent object is accurately detected.

According to the embodiment, since the correction coefficient may be always 1.0 or more, the capacity of the memory necessary for storing is small in comparison with the case where the correction coefficient is within the range of 1.0 or less. Moreover, since the correction coefficient is within the relatively-narrow range which is approximately slightly above 1.0, the number of bits for expressing the correction coefficient is reduced, and this also contributes to the reduction in the capacity of the memory necessary for storing.

According to the embodiment, in the plurality of pixels 16, the pixels 16 immediately adjacent to one another constitute one group, and the correction coefficient is obtained for each group by using the photo-reception elements 11b arranged in each group. Thereby, the in-plane correction table 13a is obtained. Therefore, the amount of data in the in-plane correction table 13a is reduced, and the memory capacity is small in comparison with the case where the in-plane correction table 13a is obtained by obtaining the correction coefficient for each pixel 16.

For example, the correction coefficient in the in-plane correction table 13a may be obtained to approximately three digits after the decimal point, and stored. The correction coefficient may be obtained with rougher accuracy (for example, to one digit below the decimal point). Specifically, the in-plane correction table 13a is typically set by 6 bits. However, when the in-plane correction table 13a is set by 4 bits with rough accuracy, the amount of data in the in-plane correction table 13a is reduced, and the memory capacity of the above-described storage unit is reduced.

Moreover, according to the embodiment, in the case where the in-plane correction table 13a is obtained and recorded in the memory before delivering the image input/output device 1 to users, labor hour when the users form the in-plane correction table 13a is saved. However, in the case where formation of the in-plane correction table 13a is optional for users, even if the input/output panel 11 changes with the passage of time, it is possible to appropriately form the in-plane correction table 13a corresponding to the change with time, and the appropriately-corrected picked-up image is obtained all the time with high accuracy even after a long time duration in use.

In the embodiment, when the in-plane correction table 13a is formed, as indicated in S 14 and S 16 in Fig.4, the group average value and the maximum group average value detected among the groups are obtained, and the correction coefficient is obtained by calculation using the group average value and the maximum group average value. However, it is not limited that the correction coefficient is obtained by this calculation. For example, the correction coefficient may be obtained by using an arbitrary constant number, instead of the maximum group average value. This arbitrary constant number may be, for example, a value of 1. In this case, the correction coefficient is simply an inverse of the group average value. Alternatively, instead of the maximum group average value, a value which is expected to be close to the maximum group average value may be used as the above-described constant number. In this case, the correction coefficient is a value obtained by dividing this constant number by each group average value. The in-plane correction table 13a may have any value as long as it compensates (cancels) the ununiform state in the plane as indicated with curve A and curve B in Fig.9A, that is, the in-plane correction table 13a has an inverse distribution (inverted distribution) of the distribution with curve C.

In the case where the number of the correction coefficients in the in-plane correction table 13a is set small (set with roughness), and, in the in-plane correction table 13a, there is no correction coefficient corresponding to a photo-reception element group, data interpolation is performed on the basis of an existing correction coefficient of another group, and the correction coefficient may be obtained for the photo-reception element group with no corresponding correction coefficient in the in-plane correction table 13a. In this manner, correction may be performed by using the correction coefficient obtained by this interpolation. For example, the correction coefficient of the group may be interpolated with the correction coefficients of immediately adjacent groups. Thereby, it is prevented that the correction coefficient rapidly changes in the groups immediately adjacent to one another, and a gradual change in the in-plane correction table 13a is possible. Moreover, the memory capacity necessary for storing the in-plane correction table 13a is reduced.

In the embodiment, in the photo-reception elements 11b arranged in matrix, the plurality of photo-reception elements 11b immediately adjacent to one another constitute one group, and the correction coefficient is obtained for each group. Thereby, the in-plane correction table 13a is obtained. However, it is also possible that the correction coefficient is obtained for each photo-reception element 11b arranged in each pixel 16, and the plurality of correction coefficients are brought together. Thereby, the in-plane correction table 13a is obtained. In this case, the correction coefficient is finely obtained in the plane in comparison with the case where the correction coefficient is obtained for each group. Therefore, the in-plane corrected image with higher accuracy is obtained.

Modifications described below are also possible.

### Modification 1

An image input/output device according to Modification 1 includes a display signal processing section 12, an input/output panel 11, a photo-reception signal processing section 13 and an image processing section 14, which are arranged in a display 10, and a control section 21 arranged in an electric device main body 20 using the display 10.

In the above-described embodiment, the reference image with a uniform luminance is used when forming the in-plane correction table 13a in the image input/output device according to the embodiment. However, in Modification 1, an arbitrary reference image is displayed on an input/output panel 11, and an in-plane correction table 13a is formed by using the arbitrary reference image. This reference image is arbitrary to have patterns with a plurality of luminance levels in one frame.

In the configuration of such an image input/output device, the display signal processing section 12 is connected to a previous stage of the input/output panel 11 and a previous stage of the photo-reception signal processing section 13. The display signal processing section 12 outputs, to the input/output panel 11, a drive signal to display the reference image on the basis of the display data. The display signal processing section 12 outputs, to the photo-reception signal processing section 13, a luminance data of the reference image to be displayed on the input/output panel 11.

In the input/output panel 11, when the reference image is reflected by a reference reflecting plate, a photo-reception element 11b receives the reflected light of the reference image, and outputs a photo-reception signal to the photo-reception signal processing section 13. The photo-reception signal processing section 13 is also connected to a subsequent stage of the input/output panel 11. When forming the in-plane correction table 13a, the photo-reception signal is supplied from the input/output panel 11 to the photo-reception signal processing section 13. The photo-reception signal processing section 13 multiplies a coefficient in an inverted light intensity table by the photo-reception signal, where the inverted light intensity table is obtained from the luminance data of the reference image corresponding to the photo-reception signal obtained from the input/output panel 11. Thereby, the influence of the reference image which has the ununiform luminance in the plane is eliminated from the photo-reception signal.

After this, the photo-reception signal processing section 13 performs processing indicated with S14 to S18 in Fig.4, and thereby the in-plane correction table 13a is obtained.

Operations of the image input/output device according to Modification 1 are the same as those of the image input/output device described in the embodiment. Therefore, the descriptions are omitted.

When forming the in-plane correction table 13a, in the image input/output device, the coefficient in the inverted light intensity table which is obtained from the luminance data of the reference image corresponding to the photo-reception signal obtained from the input/output panel 11 is used, the reference image being output from the display signal processing section 12 to the photo-reception signal processing section 13. Then, correction is performed so that the influence of the reference image with the ununiform luminance in the plane is eliminated from the photo-reception signal obtained from the input/output panel 11.

For this reason, the image input/output device obtains the in-plane correction table 13a without using the reference image with the ununiform luminance described in the embodiment. Therefore, it is unnecessary to store the reference image with the uniform luminance, the reference image being necessary only when forming the in-plane correction table 13a.

In the case where the reference image displayed on the input/output panel I I continuously changes, the display signal processing section 12 obtains an inverse table of the image data for each frame, and outputs the inverse table to the photo-reception signal processing section 13. The photo-reception signal processing section 13 performs correction by using the photo-reception signal input from the input/output panel 11, and the inverse table obtained from the image data when the photo-reception signal is obtained in the input/output panel 11. After that, the processing is performed as indicated with S14 to 18 in Fig.4. The in-plane correction table 13a may be obtained in this manner.

### Modification 2

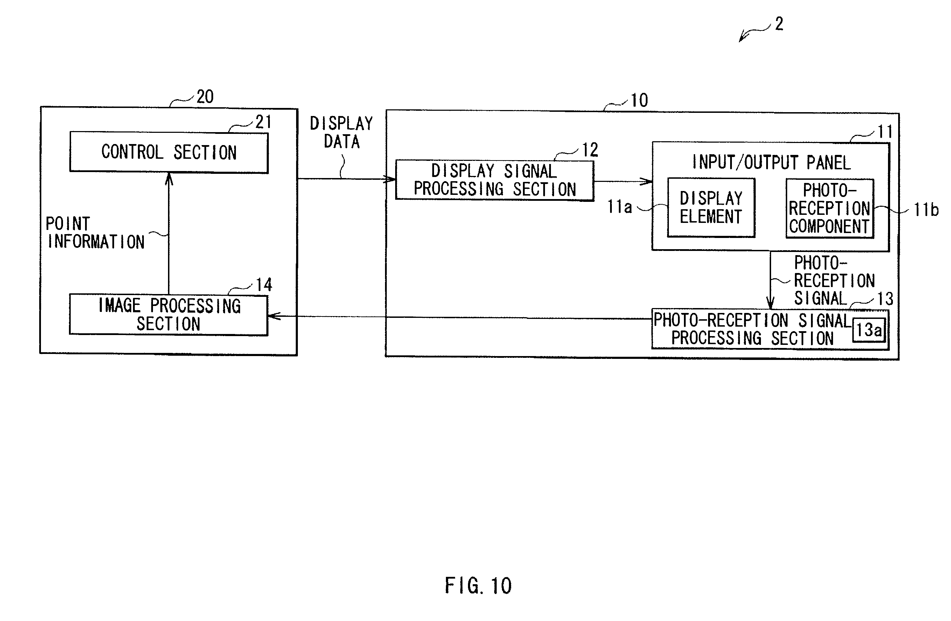

Fig. 10 illustrates the configuration of an image input/output device 2 according to Modification 2. The image input/output device 2 differs from the image input/output device 1 according to the embodiment in that an image processing section 14 is arranged in an electric device main body 20. That is, in the image input/output device 2 according to Modification 2, an display signal processing section 12, an input/output panel 11, and a photo-reception signal processing section 13 are arranged in a display 10, and a control section 21 and the image processing section 14 are arranged in the electric device main body 20. Even in such an image input/output device 2, the same effects as in the image input/output device 1 according to the embodiment are obtained.

In the image input/output devices 1 and 2 described in the embodiment, and Modification 1 and Modification 2, the configuration where a liquid crystal display panel is used as the input/output panel 11 is described. However, the image input/output device according to the present invention may be configured with an organic electroluminescence (EL) panel or the like as the input/output panel. When bias voltage in a forward direction is applied, the organic EL element emits light. When bias voltage in a reverse direction is applied, the organic EL element receives light and generates a current. For this reason, the organic EL element includes the display element 11a and the photo-reception element 11b. In the configuration of the input/output panel 11, the organic EL element is arranged in each pixel 16. By applying bias voltage in the forward direction to each organic EL element in response to the display data, the organic EL element emits light and displays the image. By applying bias voltage in the reverse direction to other organic EL elements, the organic EL element receives the reflected light. At this time, when the in-plane correction method described in the embodiment is performed to the light intensity distribution profile in the display plane when the organic EL element performs photo-emission by applying the bias voltage in the forward direction, and the photo-reception sensitivity distribution profile in the plane when the organic EL element performs photo-reception by applying the bias voltage in the reverse direction, it is possible to correct these distributions in the plane.

Hereinbefore, the present invention is described with the embodiment and the modifications. However, the present invention it not limited to those, and various modifications may be made. For example, the case where one photo-reception cell is provided corresponding to one photo-emission cell as illustrated in Figs.2 and 3 is described. However, one photo-reception cell may be provided corresponding to a plurality of photo-emission cells.

The present application contains subject matter related to that disclosed in Japanese Priority Patent Application JP 2008-176685 filed in the Japan Patent Office on July 7, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An image input/output device comprising:
an input/output panel including a plurality of display elements displaying an image on a display plane based on an image signal, and including a plurality of photo-reception elements arranged along the display plane to receive lights which are emitted from the display plane and then reflected from an external adjacent object;
a correction section correcting photo-reception signals from the photo-reception elements with use of an in-plane correction table where correction coefficients are associated with positions on the display plane, respectively, a value distribution profile in the display plane of the correction coefficients being defined based on both of a light intensity distribution profile in the display plane of the light emitted from the display plane and a photo-reception sensitivity distribution profile in the display plane of the photo-reception elements; and
an image processing section obtaining information concerning one or more of position, shape and size of the external adjacent object based on the photo-reception signals corrected by the correction section.

2. The image input/output device according to claim 1, wherein
the value distribution profile of the correction coefficient is defined as an inversion of a synthesized distribution profile which is a synthesis of the light intensity distribution profile and the photo-reception sensitivity distribution profile, and
the correction section corrects the photo-reception signals from the photo-reception elements through multiplying the photo-reception signals by the correction coefficients, respectively.

3. The image input/output device according to claim 1 or 2, wherein each of the correction coefficients is 1.0 or more.

4. The image input/output device according to any one of claims 1 to 3, wherein the in-plane correction table is configured by allocating each of the correction coefficients to each of a plurality of groups which are formed by grouping the photo-reception elements.

5. The image input/output device according to any of claims 1 to 4, wherein each of the correction coefficients is an inverse of a normalized value obtained by normalizing a corresponding group average value with a maximum value of all of group average values, each of the group average values being obtained by averaging the photo-reception signals generated from photo-reception elements in a corresponding group under such a condition that a reference reflecting plate is disposed to face the display plane.

6. The image input/output device according to any one of claims 1 to 3, wherein the in-plane correction table is configured by allocating each of the correction coefficients to each of the photo-reception elements.

7. The image input/output device according to claim 6, wherein each of the correction coefficients is an inverse of a normalized value obtained by normalizing a corresponding photo-reception signal value with a maximum value of all of the photo-reception signal values obtained from the photo-reception elements under such a condition that a reference reflecting plate is disposed to face the display plane.

8. The image input/output device according to any one of claims 1 to 7, wherein the correction section obtains an interpolated correction coefficient for a non-allocated photo-reception element to which a correction coefficient is not allocated in the in-plane correction table, through an interpolation with use of the correction coefficients for other photo-reception elements to which correction coefficients are allocated, and the correction section corrects a photo-reception signal from the non-allocated photo-reception element with use of the obtained interpolated correction coefficient.

9. An image input/output device comprising:
an input/output panel including a plurality of display elements displaying an image on a display plane based on an image signal, and including a plurality of photo-reception elements arranged along the display plane to receive lights which are emitted from the display plane and then reflected from an external adjacent object;
a correction section correcting photo-reception signals from the photo-reception elements based on a distribution of outputs from the photo-reception elements, the outputs being generated in response to reference reflection lights which come into the display plane in correspondence with reference emission lights with predetermined intensity emitted from the display plane; and
an image processing section obtaining information concerning one or more of position, shape and size of the external adjacent object based on the photo-reception signals corrected by the correction section.

10. The image input/output device according to claim 9, wherein the correction section corrects the photo-reception signals from the photo-reception elements with use of correction coefficients obtained based on a distribution of outputs from the photo-reception elements, the outputs being generated from lights received by the photo-reception elements when a reference reflecting plate is disposed to face the display plane.

11. The image input/output device according to any one of claims 1 to 10 further comprising a light source which emits light from the display plane,
wherein the light source emits display light for displaying an image as well as light to be received by the photo-reception elements.

12. The image input/output device according to claim 11, wherein the light source emits light including infrared light from the display plane, and the infrared light is received by the photo-reception element.

13. A method of inputting images, comprising:
receiving lights by a plurality of photo-reception elements arranged along the display plane, the lights being emitted from a display plane and then reflected from an external adjacent object;
correcting photo-reception signals from the photo-reception elements with use of correction coefficients having a value distribution profile in the display plane, the value distribution profile being defined as an inversion of a synthesized distribution profile which is a synthesis of a light intensity distribution profile in the display plane of the lights emitted from the display plane and a photo-reception sensitivity distribution profile in the display plane of the photo-reception elements; and
obtaining information concerning one or more of position, shape and size of the external adjacent object based on the photo-reception signals corrected by the correction section.

14. A method of correcting photo-reception levels in an image input/output device, the image input/output device being configured to have a plurality of photo-reception elements arranged along a display plane to receive lights which are emitted from the display plane and then reflected from an external adjacent object, and being configured to obtain information concerning one or more of position, shape and size of the external adjacent object based on photo-reception signals from the photo-reception elements, the method comprising:
obtaining correction coefficients having a value distribution profile in the display plane, the value distribution profile being defined as an inversion of a synthesized distribution profile which is a synthesis of a light intensity distribution profile in the display plane of the lights emitted from the display plane and a photo-reception sensitivity distribution profile in the display plane of the photo-reception elements; and
correcting the photo-reception signals from the photo-reception elements with use of the obtained correction coefficients.

15. A method of inputting images, comprising:
receiving lights by a plurality of photo-reception elements arranged along the display plane, the lights being emitted from a display plane and then reflected from an external adjacent object;
correcting photo-reception signals from the photo-reception elements based on a distribution of outputs from the photo-reception elements, the outputs being generated in response to reference reflection lights which come into the display plane in correspondence with reference emission lights with predetermined intensity emitted from the display plane; and
obtaining information concerning one or more of position, shape and size of the external adjacent object based on the corrected photo-reception signals.

16. A method of correcting photo-reception levels in an image input/output device, the image input/output device being configured to have a plurality of photo-reception elements arranged along a display plane to receive lights which are emitted from the display plane and then reflected from an external adjacent object, and being configured to obtain information concerning one or more of position, shape and size of the external adjacent object based on photo-reception signals from the photo-reception elements, the method comprising:
obtaining a distribution of outputs from the photo-reception elements, the outputs being generated in response to reference reflection lights which come into the display plane in correspondence with reference emission lights with predetermined intensity emitted from the display plane; and
correcting the photo-reception signals from the photo-reception elements based on the distribution of the outputs.
